# EUROPÄISCHE PATENTSCHRIFT

(11) **EP 2 325 509 B1**
(45) Veröffentlichungstag und Bekanntmachung des Hinweises auf die Patenterteilung: **04.01.2017**
(21) Anmeldenummer: 10188804.8
(22) Anmeldetag: 26.10.2010
(51) Int. Cl.: F16C 33/58, F16C 33/64, F16C 19/18, F16C 23/08

(54) **WÄLZLAGER MIT AUS BLECH HERGESTELLTEN LAGERRINGEN**
ROLLER BEARING WITH SHEET METAL BEARING RINGS
PALIER À ROULEMENT DOTÉ DE BAGUES DE PALIER FABRIQUÉES EN TÔLE

(30) Priorität: 18.11.2009 DE 102009053799
(43) Veröffentlichungstag der Anmeldung: 25.05.2011
(73) Patentinhaber: Schaeffler Technologies AG & Co. KG, 91074 Herzogenaurach (DE)
(72) Erfinder: Ribeiro, Catia de Jesus, 91074, Herzogenaurach (DE)

(56) Entgegenhaltungen:
- EP-A2- 0 328 496
- DD-A1- 126 199
- DE-A1- 19 802 454
- DE-A1- 19 908 158
- FR-A- 1 566 650

## Beschreibung

### Gebiet der Erfindung

Die Erfindung betrifft ein Wälzlager mit einem Außenring, einem Innenring und dazwischen angeordneten Wälzkörpern, bei dem die Wälzkörper in mehreren axial nebeneinander angeordneten Reihen in mindestens zwei Laufbahnen geführt sind, und bei dem die Lagerringe aus umgeformten Blech hergestellt sind.

Ein solches Wälzlager ist aus der FR 1 566 650 A bekannt.

### Hintergrund der Erfindung

Ein Wälzlager dieser Bauart ist aus der DD 1 26 199 B2 bekannt und als Radialkugellager mit einer oder zwei Wälzkörperreihen ausgebildet. Die Lagerringe sind jeweils aus einem einstückigen Blechrohr durch einen Umformvorgang hergestellt, bei dem gemäß einer Ausführungsform die axialen Enden des Lageringes wulstförmig umgeformt sind. Bei einer anderen Ausführungsform sind in den Lagerinnenring Laufrillen für die Wälzkörper eingeformt. Das bekannte Wälzlager ist für Anwendungsfälle geeignet, bei denen keine großen Kräfte auftreten und keine große Präzision gefordert ist. Ihr Vorteil wird bei den vergleichsweise geringen Herstellkosten gesehen.

### Aufgabe der Erfindung

Der Erfindung liegt die Aufgabe zugrunde, ein gattungsgemäßes Wälzlager vorzustellen, welches leicht mit einem feststehenden, das Wälzlager tragenden Gegenstand verbindbar ist. Gemäß einer weiteren Aufgabe soll das neue Wälzlager im Vergleich zu dem bekannten Wälzlager steifer ausgebildet sein und daher größere Kräfte übertragen können.

### Zusammenfassung der Erfindung

Die Aufgabe wird mit einem Wälzlager gemäß Anspruch 1 gelöst.

Dadurch, dass die Lagerringe als Blech-Umformteile ausgebildet sind, kann das Wälzlager in herstellungstechnisch einfacher Weise und damit besonders kostengünstig realisiert werden. Ein Umformteil ist im Sinne der Erfindung ein Bauteil, welches gezielt plastisch in eine andere Form gebracht ist. Dadurch ist eine aufwendige Herstellung der Lagerringe mittels beispielsweise spanender Bearbeitung nicht oder nur teilweise erforderlich. Bevorzugt werden die Lagerringe durch Biegen hergestellt.

Das erfindungsgemäße Wälzlager bildet eine montagefertige Einheit aus Lager und Gehäuse, da der Lageraußenring mittels des Flanschabschnittes auch Gehäusefunktionen wahrnimmt. Durch die einstückige Anordnung eines Flanschabschnittes an dem Außenring des Wälzlagers ist dieses sehr einfach und schnell beispielsweise mit einer Rahmen- oder Fahrwerksstruktur eines Kraftfahrzeuges verbindbar. Dazu werden einfach Verbindungsmit-tel durch axiale Öffnungen in dem Flanschabschnitt gesteckt und anschließend beispielsweise in eine Gewindebohrung des feststehenden Bauteils eingeschraubt. Das Lösen dieser Lagerbefestigung erfolgt in umgekehrter Reihenfolge und ebenso einfacher Weise.

Der Außenring weist eine durch den genannten Umformvorgang gebildete Materialdoppelung des Blechmaterials auf, wobei zwei Lagen des gleichen Materials zumindest teilweise übereinander in Berührkontakt liegen. Die Materialdopplung ist im Bereich der Lauffläche für die Wälzkörper und im Bereich des Flanschabschnittes ausgebildet.

Hierdurch ist der Außenring des Wälzlagers in besonderer Weise versteift, so dass dieser zur Befestigung an einem drehfesten Bauteil sehr gut geeignet ist.

Bei dem Außenring mit Materialdoppelung bilden die axialen Seiten des ursprünglich kreisringförmigen Blechs nach dem Umformvorgang das radiale Ende des Flansches.

Der Innenring des Wälzlagers gemäß der Erfindung weist zwei vorzugsweise durch Umformen gebildete Laufbahnen bzw. Laufrillen auf. Der Außenring hingegen kann eine für beide Wälzkörperreihen gemeinsame, durch Umformen gebildete Lauffläche aufweisen, oder zwei gesonderte, durch Umformen gebildete Laufbahnen.

Gemäß einer Ausgestaltung ist vorgesehen, dass die den Wälzkörpern zugewandte einzige Lauffläche des Laufflächenabschnitts des Außenrings nach radial außen gewölbt ausgebildet ist. Dadurch ist das Wälzlager selbstausrichtend, da der Außenring gegenüber dem Innenring zumindest in geringem Maße verkippbar ist. Eine etwaige Schiefstellung einer zu lagernden Welle ist hierdurch besonders gut auszugleichen.

Bei dem Außenring ist bevorzugt vorgesehen, dass dieser im hälftigen Axialschnitt eine weitgehend T-förmige Geometrie aufweist, wobei ein Schenkel des Außenringes zwischen den in axialer Richtung angeordneten zumindest beiden Wälzkörperreihen radial nach außen gerichtet angeordnet ist. Die T-Form bietet bekanntermaßen eine hohe Steifigkeit im Hinblick auf die Gehäusefunktion des umgeformten Teils sowie im Hinblick auf seine Funktion als Außenring für das Wälzlager.

Außerdem wird es als vorteilhaft beurteilt, wenn der Außenring wenigstens einen Schulterabschnitt zur Anlage und gegebenenfalls Fixierung einer Abdeckung und/oder Dichtung aufweist. Die Verbindung der Abdeckung oder des Dichtungsbauteils kann durch eine Nut-Wulst-Verbindung oder durch ein Verprägen oder Verstemmen dieser Bauteile erfolgen.

Schließlich kann vorgesehen sein, dass der Innenring an seinen axialen Enden jeweils einen durch Umformen gebildeten und nach radial innen abgewinkelten Endabschnitt aufweist. Durch dieses Konstruktionsdetail kann der Innenring ohne eine Materialdopplung vergleichsweise steif ausgebildet werden, da sich die radial nach innen abgewinkelten axialen Enden des Innenringes beispielsweise auf einer Welle radial abstützen können. Durch diese Klemmwirkung ist auch eine drehfeste Verbindung des Lagerinnenringes mit der Welle realisierbar.

Bevorzugt werden der Innenring und/oder der Außenring des Wälzlagers aus einer Blechtafel hergestellt, wobei jeweils ein Blechstreifen abgeschnitten, dessen längsseitigen Enden miteinander zu einem ringförmigen Streifen verbunden und dieser Blechring anschließend zu einem Lagerring umgeformt wird.

Das Wälzlager kann mit oder ohne Käfig für die Wälzkörper ausgebildet sein. Das Wälzlager kann ferner ein Axiallager sein. Auch kann das Wälzlager als ein Kugellager, Zylinderrollenlager oder Nadellager ausgebildet sein.

### Kurze Beschreibung der Zeichnungen

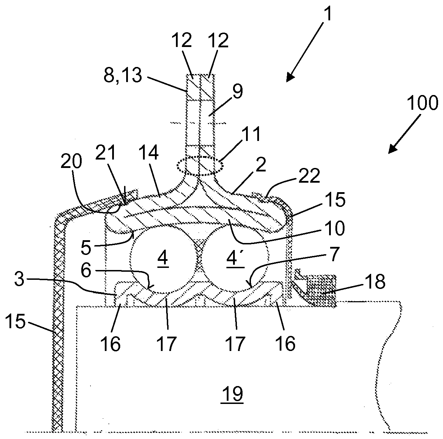

Die Erfindung wird im Folgenden anhand der beiliegenden Zeichnung an einem Ausführungsbeispiel näher erläutert. Die einzige Figur zeigt eine Lageranordnung mit einer Ausführungsform eines erfindungsgemäßen Wälzlagers im hälftigen Axialschnitt. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

### Detaillierte Beschreibung der Zeichnungen

Die einzige Figur zeigt in schematischer Darstellung eine Lageranordnung 100 mit einer Ausführungsform eines Wälzlagers 1, welches als Radiallager ausgebildet ist und auf einer zu lagernden Welle 19 befestigt ist. Dieses Wälzlager 1 ist besonders für Anwendungsfälle geeignet, bei denen eine Schiefstellung der zu lagernden Welle auszugleichen ist, und kann beispielsweise in Landmaschinen eingesetzt werden. Auch ist der Einsatz des Wälzlagers 1 in Kraftfahrzeugen jeglicher Art möglich. Das Wälzlager 1 ist vorzugsweise an der Antriebsseite der zu lagernden Welle angeordnet. Das Wälzlager 1 weist zwei relativ zueinander drehbare Lagerringe 2, 3 auf, nämlich einen Außenring 2 und einen Innenring 3. Zwischen diesen Lagerringen 2, 3 sind die Wälzkörper 4, 4' des Wälzlagers 1 angeordnet, welche auf Laufbahnen 5, 6, 7 der Lageringe 2, 3 abrollbar sind. Das Wälzlager 1 ist als zweireihiges Lager ausgebildet, so dass, in axialer Richtung des Wälzlagers 1 gesehen, zwei Reihen mit umlaufenden Wälzkörpern 4, 4' vorhanden sind.

Um das Wälzlager 1 besonders kostengünstig realisieren zu können, sind die Lagerringe 2, 3 durch Umformen, vorzugsweise durch Biegen eines Blechs gebildet. Zur Erzeilung einer vergleichsweise hohen Bauteilsteifigkeit sowie zu leichten Befestigung an einem drehfesten Bauteil weisen die Lagerringe 2, 3 eine besondere Geometrie auf.

Der Innenring 3 ist mit der Welle 19 drehfest verbunden, vorzugsweise auf diese aufgepresst. Der Innenring 3 weist bevorzugt durch Umformen gebildete Laufbahnen 6, 7 auf, in welchen die Wälzkörper 4, 4' eingesetzt sind. Dadurch kann das Wälzlager 1 Kräfte auch in axialer Richtung, das heißt in Richtung der Längsachse der Welle 19, aufnehmen.

In dem gewählten Ausführungsbeispiel weist der Innenring 3 an seinen axialen Enden durch Umformen gebildete Abschnitte 16 zum radialen Abstützen und drehfesten Verbinden mit der Welle 19 auf. Diese Abschnitte 16 weisen radial nach innen und liegen auf der Oberfläche der Welle fest auf. Die ebenfalls durch Umformen gebildeten Laufbahnabschnitte 17 liegen radial innen auf der Oberfläche der Welle 19 auf und erhöhen dadurch die Reibkraft zum verdrehfesten Halten des Innenringes 3 auf der Welle.

Der Außenring 2 weist einen Laufflächenabschnitt 10 auf, an dem radial innen eine gemeinsame Laufbahn 5 für die Wälzkörper 4, 4' der beiden Wälzkörperreihen ausgebildet ist. Dieser Laufflächenabschnitt 10 ist durch einen Umformprozess aus einem ebenen und anschließend ringförmig gebogenen Blech hergestellt. Der Außenring 2 ist nicht nur ein Bestandteil des Wälzlagers 1, er übernimmt mit einem radial nach außen weisenden Flanschabschnitt 8 zugleich auch die Funktion eines Gehäuses für das Wälzlager 1. Der Flanschabschnitt 8 ist kreisförmig ausgebildet oder besteht aus umfangsverteilt angeordneten Kreisabschnitten, und verfügt über mehrere über dem Umfang angeordnete Durchgangsbohrungen 9, mittels welchen der Flanschabschnitt 8 beispielsweise an einem drehfesten Bauteil einer Landmaschine montiert werden kann.

Der Außenring 2 ist im hälftigen Axialschnitt im Wesentlichen T-förmig ausgebildet, wobei ein Schenkel 13 den Flanschabschnitt bildet und sich zwischen den in axialer Richtung angeordneten zwei Reihen von Wälzkörpern 4, 4' radial nach außen erstreckt.

Der Außenring 2 ist in der Weise durch Umformen gebildet, dass an seinen Funktionsbereichen, nämlich der Laufbahn 5 und dem Flanschabschnitt 8, eine Materialdopplung vorliegt, welche bevorzugt durch eine entsprechende Umkantung des sich ursprünglich axial erstreckenden Bleches erzeugt ist. Der Materialdopplung ist das Bezugszeichen 11 zugeordnet, welches beispielhaft auf einen durch Umkreisung markierten Bereich des Außenringes 2 weist. Die beiden axialen Enden 12 der dem Außenring 2 zugrunde liegenden Blechplatte bilden das radiale Ende des Flanschabschnittes 8, so dass bei einem Befestigen desselben mittels Schrauben durch die umlaufend vorgesehenen Durchgangsbohrungen 9 des Flanschabschnittes 8 vorteilhaft ein Zusammenklemmen dieser Enden 12 erfolgt.

Bevorzugt ist der die Laufbahn 5 aufweisende Laufflächenabschnitt 10 des Außenrings 2 mit seiner den Wälzkörpern 4, 4' zugewandten Seite nach radial außen gewölbt ausgebildet.

Schließlich weist der Außenring 2 axial gegenüberliegend jeweils einen Schulterabschnitt 14 auf, welcher zur Anlage und gegebenenfalls Fixierung einer Abdeckung 15 oder Dichtung dient. Die Verbindung des Außenringes 2 mit der Abdeckung 15 erfolgt gemäß der in der Zeichnungsfigur links dargestellte Variante mittels eines radial innen an der Abdeckung 15 ausgebildeten Wulstes 20, der in eine Ringnut 21 an dem Schulterabschnitt 14 des Außenringes 2 eingreift, oder gemäß der auf in der rechten Bildhälfte abgebildeten Variante über eine Verstemmung von Material der Abdeckung 15 in die Ringnut 21. Außerdem zeigt die Zeichnungsfigur, dass die Abdeckung 15 mit einem Dichtring 18 zusammenwirkt, der drehfest auf der Oberfläche der Welle 19 befestigt und abdichtend an der Abdeckung anliegt.

### Bezugszeichenliste

- 1: Wälzlager
- 2: Außenring
- 3: Innenring
- 4: Wälzkörper, Wälzkörperreihe
- 4': Wälzkörper, Wälzkörperreihe
- 5: Laufbahn am Außenring
- 6: Laufbahn am Innenring
- 7: Laufbahn am Innenring
- 8: Flanschabschnitt
- 9: Durchgangsbohrung
- 10: Laufflächenabschnitt
- 11: Materialdopplung
- 12: Freie Ende des Außenringblechs 2
- 13: Schenkel
- 14: Schulterabschnitt des Außenrings 2
- 15: Abdeckung
- 16: Endabschnitt des Innenrings 2
- 17: Laufbahnabschnitt des Innenrings 2
- 18: Dichtring
- 19: Welle
- 20: Wulst am Schulterabschnitt der Abdeckung 15
- 21: Ringnut am Außenring 3
- 22: Verprägung
- 100: Lageranordnung

## Patentansprüche

1. Wälzlager (1) mit einem Außenring (2), einem Innenring (3) und dazwischen angeordneten Wälzkörpern (4, 4'), bei dem die Wälzkörper (4, 4') in mehreren axial nebeneinander angeordneten Reihen in mindestens zwei Laufbahnen (5, 6, 7) geführt sind, und bei dem der Außenring (2) und der Innenring (3) jeweils einstückig aus umgeformten Blechringen hergestellt sind, wobei der Außenring (2) zumindest einen Flanschabschnitt (8) aufweist, der in Bezug zu einem, die zumindest eine Lauffläche (5) des Außenringes (2) aufweisenden Abschnitt (10) des Außenrings (2) abgewinkelt angeordnet ist, **dadurch gekennzeichnet,**
**dass** der Außenring (2) eine durch das Umformen gebildete Materialdoppelung (11) aufweist, bei der zwei Lagen des umgeformten Blechringes zumindest teilweise übereinander in Berührkontakt liegen und die im Bereich der Laufbahn (5) für die Wälzkörper (4, 4') und im Bereich des zumindest einen Flanschabschnitts (8) ausgebildet ist, und dass bei dem Außenring (2) mit Materialdoppelung (11) die beiden freien Enden (12) des zugrunde liegenden Blechringes das radiale Ende des Flanschabschnittes (8) bilden.

2. Wälzlager nach Anspruch 1, **dadurch gekennzeichnet, dass** der Flanschabschnitt (8) des Außenrings (2) mehrere Durchgangsbohrungen (9) durch die beiden freien Enden (12) aufweist.

3. Wälzlager nach Anspruch 2, **dadurch gekennzeichnet, dass** der Außenring (2) im Querschnitt gesehen achsensymmetrisch zu einer Achse ausgebildet ist, die zwischen den freien Enden (12) senkrecht zur Laufbahn (5) des Außenrings (2) verläuft.

4. Wälzlager nach einem der vorherigen Ansprüche, **dadurch gekennzeichnet, dass** der Innenring (3) zwei durch Umformen gebildete Laufbahnen (6, 7) und der Außenring (2) eine gemeinsame durch Umformen gebildete Laufbahn (5) oder zwei gesonderte durch Umformen gebildete Laufbahnen für die Wälzkörper (4, 4') der beiden Wälzkörperreihen aufweist.

5. Wälzlager nach einem der vorherigen Ansprüche, **dadurch gekennzeichnet, dass** der Außenring (2) im hälftigen Axialschnitt eine weitgehend T-förmige Geometrie aufweist, wobei zwischen den in axialer Richtung angeordneten beiden Wälzkörperreihen (4, 4') ein Schenkel (13) des Außenringes (2) radial nach außen gerichtet ist.

6. Wälzlager nach einem der vorherigen Ansprüche, **dadurch gekennzeichnet, dass** der Außenring (2) wenigstens einen Schulterabschnitt (14) zur Anlage und gegebenenfalls Fixierung einer Abdeckung (15) und/oder Dichtung aufweist.

7. Wälzlager nach einem der vorherigen Ansprüche, **dadurch gekennzeichnet, dass** die den Wälzkörpern (4, 4') zugewandte einzige Laufbahn (5) des Laufflächenabschnitts (10) des Außenrings (2) nach radial außen gewölbt ausgebildet ist.

8. Wälzlager nach einem der vorherigen Ansprüche, **dadurch gekennzeichnet, dass** der Innenring (3) an seinen axialen Enden jeweils einen durch Umformen gebildeten und nach radial innen abgewinkelten Endabschnitt (16) aufweist.

## Claims

1. Anti-friction bearing (1) having an outer ring (2), an inner ring (3) and rolling bodies (4, 4') which are arranged in between, in which anti-friction bearing (1) the rolling bodies (4, 4') are guided in a plurality of rows which are arranged axially next to one another in at least two raceways (5, 6, 7), and in which anti-friction bearing (1) the outer ring (2) and the inner ring (3) are produced in each case in one piece from reshaped sheet metal rings, the outer ring (2) having at least one flange section (8) which is arranged such that it is angled away in relation to a section (10) of the outer ring (2) which has the at least one running face (5) of the outer ring (2), **characterized in that** the outer ring (2) has a double layer of material (11) which is formed by way of the reshaping and in which two layers of the reshaped sheet metal ring lie at least partially above one another in contact, and which double layer of material (11) is configured in the region of the raceway (5) for the rolling bodies (4, 4') and in the region of the at least one flange section (8), and **in that**, in the case of the outer ring (2) with a double layer of material (11), the two free ends (12) of the sheet metal ring on which it is based form the radial end of the flange section (8).

2. Anti-friction bearing according to Claim 1, **characterized in that** the flange section (8) of the outer ring (2) has a plurality of through bores (9) through the two free ends (12).

3. Anti-friction bearing according to Claim 2, **characterized in that** the outer ring (2) is configured so as to be axially symmetrical, as viewed in cross section, with respect to an axis which runs between the free ends (12) perpendicularly with respect to the raceway (5) of the outer ring (2).

4. Anti-friction bearing according to one of the preceding claims, **characterized in that** the inner ring (3) has two raceways (6, 7) which are formed by way of reshaping, and the outer ring (2) has a common raceway (5) which is formed by way of reshaping or two separate raceways which are formed by way of reshaping for the rolling bodies (4, 4') of the two rolling body rows.

5. Anti-friction bearing according to one of the preceding claims, **characterized in that**, in an axial half section, the outer ring (2) has a largely T-shaped geometry, a limb (13) of the outer ring (2) being directed radially towards the outside between the two rolling body rows (4, 4') which are arranged in the axial direction.

6. Anti-friction bearing according to one of the preceding claims, **characterized in that** the outer ring (2) has at least one shoulder section (14) for supporting and optionally fixing a cover (15) and/or seal.

7. Anti-friction bearing according to one of the preceding claims, **characterized in that** the single raceway (5) of the running face section (10) of the outer ring (2), which raceway (5) faces the rolling bodies (4, 4'), is of radially outwardly curved configuration.

8. Anti-friction bearing according to one of the preceding claims, **characterized in that**, at its axial ends, the inner ring (3) has in each case one end section (16) which is formed by way of reshaping and is angled away radially to the inside.

## Revendications

1. Palier à roulement (1) comprenant une bague extérieure (2), une bague intérieure (3) et des corps de roulement disposés entre elles (4, 4'), dans lequel les corps de roulement (4, 4') sont guidés dans plusieurs rangées disposées axialement les unes à côté des autres dans au moins deux chemins de roulement (5, 6, 7), et dans lequel la bague extérieure (2) et la bague intérieure (3) sont fabriquées d'une seule pièce à partir de bagues en tôle façonnées, la bague extérieure (2) présentant au moins une portion de bride (8) qui, par rapport à une portion (10) de la bague extérieure (2) présentant l'au moins une surface de roulement (5) de la bague extérieure (2), est disposée sous forme coudée, **caractérisé en ce que** la bague extérieure (2) présente un dédoublement de matériau (11) formé par le façonnage, dans lequel deux couches de la bague en tôle façonnée sont situées au moins en partie en contact l'une sur l'autre, et qui est réalisé dans la région du chemin de roulement (5) pour les corps de roulement (4, 4') et dans la région de l'au moins une portion de bride (8), et **en ce que** dans le cas de la bague extérieure (2) avec le dédoublement de matériau (11), les deux extrémités libres (12) de la bague en tôle d'origine forment l'extrémité radiale de la portion de bride (8).

2. Palier à roulement selon la revendication 1, **caractérisé en ce que** la portion de bride (8) de la bague extérieure (2) présente plusieurs alésages traversants (9) à travers les deux extrémités libres (12).

3. Palier à roulement selon la revendication 2, **caractérisé en ce que** la bague extérieure (2) est réalisée, vue en section transversale, avec une symétrie axiale par rapport à un axe qui s'étend entre les extrémités libres (12) perpendiculairement au chemin de roulement (5) de la bague extérieure (2).

4. Palier à roulement selon l'une quelconque des revendications précédentes, **caractérisé en ce que** la bague intérieure (3) présente deux chemins de roulement (6, 7) formés par façonnage et la bague extérieure (2) présente un chemin de roulement (5) commun formé par façonnage ou deux chemins de roulement séparés formés par façonnage pour les corps de roulement (4, 4') des deux rangées de corps de roulement.

5. Palier à roulement selon l'une quelconque des revendications précédentes, **caractérisé en ce que** la bague extérieure (2) présente, en demi-coupe axiale, une géométrie essentiellement en forme de T, une branche (13) de la bague extérieure (2) étant orientée radialement vers l'extérieur entre les deux rangées de corps de roulement (4, 4') disposées dans la direction axiale.

6. Palier à roulement selon l'une quelconque des revendications précédentes, **caractérisé en ce que** la bague extérieure (2) présente au moins une portion d'épaulement (14) pour l'application et éventuellement la fixation d'un recouvrement (15) et/ou d'un joint d'étanchéité.

7. Palier à roulement selon l'une quelconque des revendications précédentes, **caractérisé en ce que** le chemin de roulement unique (5) de la portion de surface de roulement (10) de la bague extérieure (2), tourné vers les corps de roulement (4, 4'), est orienté de manière cintrée radialement vers l'extérieur.

8. Palier à roulement selon l'une quelconque des revendications précédentes, **caractérisé en ce que** la bague intérieure (3) présente au niveau de ses extrémités axiales à chaque fois une portion d'extrémité (16) formée par façonnage et coudée radialement vers l'intérieur.
